# FASCICULE DE BREVET EUROPEEN

(11) **EP 2 835 954 B1**
(45) Date de publication et mention de la délivrance du brevet: **11.03.2020**
(21) Numéro de dépôt: 14180260.3
(22) Date de dépôt: 07.08.2014
(51) Int. Cl.: H04L 29/12, H04L 12/18, H04W 4/08

(54) **Procédé de traitement, dans un réseau ad hoc de radiocommunication, stations de radiocommunication et programmes d'ordinateur correspondants**
Datenverarbeitungsverfahren in einem Ad-hoc-Funknetz, entsprechende Funkstationen und Computerprogramme
Method for processing radio stations and corresponding computer programs in an ad hoc radio network

(30) Priorité: 07.08.2013 FR 1301900
(43) Date de publication de la demande: 11.02.2015
(73) Titulaire: Thales, 92200 Neuilly Sur Seine (FR)
(72) Inventeur: Soulie, Antoine, 92622 Gennevilliers Cedex (FR)
(74) Mandataire: Lavoix

(56) Documents cités:
- US-A1- 2006 154 598
- US-A1- 2009 303 902
- US-A1- 2010 272 105
- LUO JUNHAI ET AL: "A survey of multicast routing protocols for mobile Ad-Hoc networks", IEEE COMMUNICATIONS SURVEYS, IEEE, NEW YORK, NY, US, vol. 11, no. 1, 1 janvier 2009 (2009-01-01), pages 78-91, XP011252847, ISSN: 1553-877X

## Description

La présente invention concerne un procédé de traitement, dans un réseau ad hoc de radiocommunication comprenant un ensemble de stations de radiocommunication constituant chacune un nœud du réseau ad hoc, pour créer un groupe comprenant un sous-ensemble desdites stations.

Le document US 2006/154598 A1 décrit un procédé pour configurer et exploiter un système radio.

Le document US 2009/303902 A1 décrit un procédé permettant à un nœud de sélectionner une route pour rejoindre un groupe de multidiffusion dans un réseau maillé sans fil.

De manière connue, un réseau ad hoc est dépourvu d'infrastructure fixe. Les stations de radiocommunication, équipées de moyens d'émission et/ou réception radio et opérant conformément à des protocoles adéquats, forment les nœuds du réseau et communiquent entre elles par l'intermédiaire d'un canal radio, ou de plusieurs canaux radio, partagé(s).

Un réseau ad hoc est notamment utilisé pour mettre en œuvre des communications tactiques entre des équipes militaires mobiles, par exemple dotées chacune d'une station de radiocommunication qui constitue un nœud du réseau. Plusieurs équipes sont généralement regroupées en des groupes, les équipes au sein d'un même groupe relevant par exemple d'un même commandement hiérarchique.

Il existe différentes techniques de création de groupes dans les réseaux de radiocommunication.

Une première technique connue est nommée « multicast avec affiliation IGMP ». Le protocole IGMP (en anglais « Internet Group Management Protocol »), utilisé dans les réseaux IP, permet à une station d'informer les stations lui servant de relais, de son appartenance à un ou des groupe(s).

Dans cette approche, la station, dite « source », du créateur du groupe transmet une demande à chaque membre du groupe qu'il crée, requérant que ce membre effectue une affiliation IGMP à l'adresse multicast qu'il lui communique dans sa demande.

Considérons que l'utilisateur d'une station source désire créer un groupe comprenant la station source et une pluralité d'autres stations.

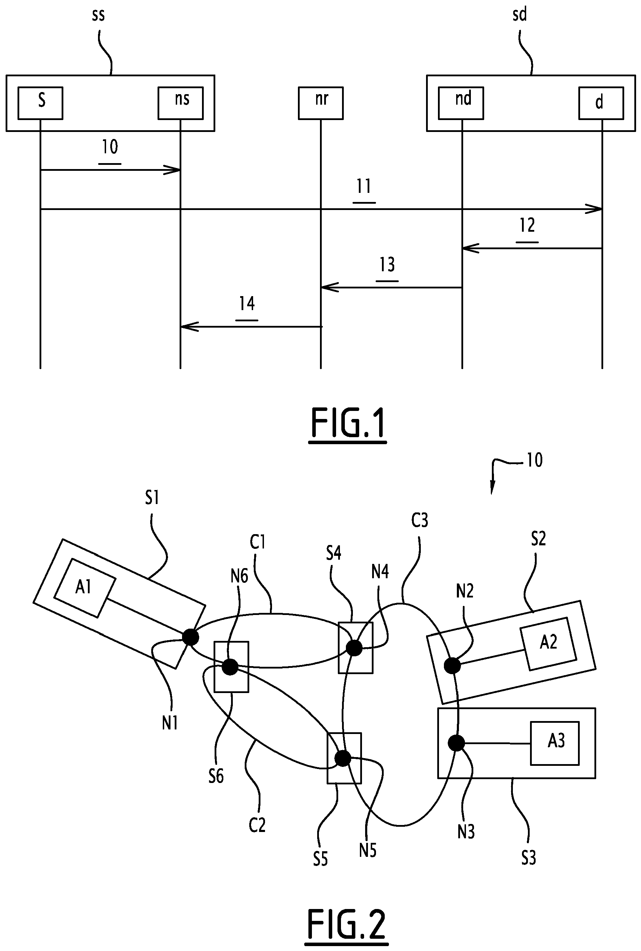

La station source, référencé « ss », comprend un bloc applicatif référencé « s » sur la figure 1, par exemple l'ordinateur de l'utilisateur, et un nœud d'émission/réception radiofréquence, référencé « ns ».

Une seule de la pluralité des autres stations, référencée « sd », a été représentée en figure 1. Elle comprend également un bloc applicatif référencé « d » sur la figure 1, par exemple l'ordinateur de son utilisateur, et un nœud d'émission/réception radiofréquence, référencé « nd ». Selon la topologie du réseau ad hoc à l'instant considéré, on considère qu'il existe une station comprenant un nœud d'émission/réception radiofréquence relayant les données entre la station source et l'autre station et référencé nr.

Un processus de création de groupe multicast avec affiliation IGMP mis en œuvre relativement à la station ss et à la station sd est représenté en figure 1.

Une première étape 10 a lieu entre le bloc applicatif s et le nœud ns, selon laquelle, suite à une commande du bloc applicatif s au nœud ns de création d'une adresse réseau de groupe, cette adresse réseau, nommé « @mid », propre au nouveau groupe à créer, est fournie au bloc applicatif s par le nœud ns : @mid =GetAddress().

Puis la station ns, depuis le bloc applicatif s, via le nœud ns, dans une étape 11, transmet une requête à la station sd, via le nœud relais nr, puis via le nœud nd et à destination du bloc applicatif d. Cette requête informe de la création d'un groupe auquel appartient la station sd et sollicite que la station sd effectue une affiliation de type IGMP à l'adresse de groupe indiquée dans la requête.

Cette requête est par exemple de type JoinGroup(Gr Id, @d, @mid), où Gr Id est le nom identifiant, au niveau applicatif, le groupe à créer d'adresse réseau multicast @mid et @d est l'adresse du bloc applicatif d.

Puis au cours d'étape 12, 13, 14, la mise en œuvre du protocole IGMP permet d'affilier la station sd, puis le nœud relais nr, à l'adresse multicast @mid. Ainsi dans l'étape 12, un message igmp(@mid, @d) est transmis au nœud nd par le bloc applicatif d. Ce dernier informe ainsi le nœud nd que l'adresse @mid est une adresse d'un groupe dont fait partie le bloc applicatif d. Ceci a pour conséquence que tous les messages destinés à @mid devront être fournis par le nœud nd au bloc applicatif d.

Dans l'étape 13, un message igmp(@mid, @nd) est transmis au nœud relais nr par le nœud nd. Ce dernier informe ainsi le nœud nr que les messages destinés à l'adresse @mid devront être transmis au nœud nd.

Dans l'étape 14, un message igmp(@mid, @nr) est transmis au nœud ns par le nœud nr. Ce dernier informe ainsi le nœud ns que les messages destinés à l'adresse @mid devront être transmis par le nœud ns au nœud nr.

Le protocole IGMP crée ainsi une chaîne, ou encore un arbre de diffusion, de proche en proche, reliant la source et chacun des membres du groupe. Cette chaîne ou arbre de diffusion, doit être maintenu(e) par le réseau quand la topologie du réseau est modifiée.

Ce processus est en réalité mis en œuvre relativement à la station ss et à chaque station de la pluralité d'autres stations du groupe.

Ainsi l'établissement d'un groupe selon cette approche multicast avec affiliation IGMP nécessite l'envoi d'un message par la source à chaque membre du groupe, puis l'envoi de messages d'affiliation sur les bonds successifs entre chaque membre et la source.

Ainsi pour des groupes de grande taille (par exemple de plus de 50 membres), la charge de trafic générée sur le réseau et le délai de constitution du groupe, qui dépendent tous deux du nombre des membres, sont élevés.

Une autre technique connue est nommée « xcast ». Le groupe est constitué explicitement par un message de demande d'affiliation de la source citant tous les membres du groupe et adressé à chacun de ces membres. Les échanges de messages entre les membres du groupe ont lieu ensuite en utilisant les adresses explicites de tous les membres. Pour un groupe avec de nombreux membres, la taille de l'en-tête, qui comprend le champ de destination, de chaque message échangé, est donc importante, ce qui accroît la charge supportée par le réseau.

La présente invention vise à proposer une solution permettant de réduire les inconvénients des techniques de l'art antérieur et notamment permettant de créer de manière dynamique et de maintenir un ou des groupes de stations tout en minimisant la signalisation, le temps et le volume des échanges nécessaires.

A cet effet, suivant un premier aspect, l'invention propose un procédé du type précité caractérisé en ce qu'il comprend les étapes suivantes :
i/ créer par une première station un premier message indiquant l'adresse réseau du groupe et les adresses réseau des stations du groupe ;
ii/ transmettre depuis ladite première station et à destination de l'ensemble des stations du réseau ad hoc, ledit premier message ;
iii/ chaque station mettant en œuvre les étapes suivantes, suite à la réception dudit premier message par ladite station :
   enregistrer par ladite station, dans une table de correspondance, l'adresse réseau du groupe et une mise en correspondance entre ladite adresse réseau du groupe indiquée dans le premier message et les adresses réseau des stations du groupe indiquées dans le premier message ;
   déterminer si l'adresse réseau de ladite station est présente dans les adresses réseau des stations du groupe indiquées par le premier message ; et
   si l'adresse réseau de ladite station est déterminée présente, enregistrer, par ladite station, l'adresse réseau du groupe indiqué dans le premier message en tant qu'adresse de groupe de ladite station.

Dans des modes de réalisation, le procédé suivant l'invention comporte en outre une ou plusieurs des caractéristiques suivantes :
- il comprend les étapes suivantes suite à la transmission sur le réseau d'un deuxième message indiquant ladite adresse réseau de groupe en tant qu'adresse de destination dudit deuxième message :
- recevoir, par une station, ledit deuxième message transmis ;
- identifier, par ladite station, depuis la table de correspondante de ladite station, la liste des adresses réseau des stations du groupe correspondant dans ladite table à l'adresse réseau de groupe indiquée en tant qu'adresse de destination du message ; et
- déterminer la nécessité ou non de transmettre ledit deuxième message par ladite station, en fonction de la liste identifiée ;
- s'il a été déterminé nécessaire de transmettre ledit deuxième message par ladite station, transmettre, par ladite station et avec ladite adresse réseau de groupe en tant qu'adresse de destination du deuxième message, ledit deuxième message ;
- il comprend en outre les étapes suivantes suite à la réception par ladite station dudit deuxième message :
- déterminer, par ladite station, si ladite adresse réseau de groupe indiquée en tant qu'adresse de destination du deuxième message est une adresse de groupe de ladite station ; et
- si ladite adresse réseau de groupe indiquée est déterminée comme adresse de groupe de ladite station, identifier un module applicatif de ladite station destiné à traiter le deuxième message, en fonction dudit deuxième message ; et fourniture du contenu dudit deuxième message au module applicatif identifié ;
- il comprend en outre une étape préalable de création de l'adresse réseau du groupe par la première station.

Suivant un deuxième aspect, la présente invention propose un réseau ad hoc de radiocommunications comprenant un ensemble de stations de radiocommunication constituant chacune un nœud du réseau ad hoc, le réseau ad hoc étant configuré pour mettre en œuvre le procédé de traitement tel que décrit ci-dessus.

Suivant un troisième aspect, la présente invention propose un procédé de communication mis en œuvre dans une première station de radiocommunication constituant un nœud d'un réseau ad hoc de radiocommunication, pour créer un groupe comprenant un sous-ensemble des stations de radiocommunication du réseau ad hoc, , caractérisé en ce qu'il comprend les étapes suivantes :
- recevoir, par la première station, un message indiquant l'adresse réseau d'un groupe de stations et les adresses réseau des stations du groupe ;
- enregistrer, par la première station, dans une table de correspondance, l'adresse réseau du groupe indiquée dans le message reçu et une mise en correspondance de l'adresse réseau du groupe et des adresses réseau des stations du groupe indiquées dans le message reçu ;
- déterminer, par la première station, si l'adresse réseau de ladite première station est présente dans le message reçu ; et
- si l'adresse réseau de ladite première station est déterminée présente, enregistrer, par la première station, l'adresse réseau du groupe indiqué dans le message en tant qu'adresse de groupe de ladite première station.

Suivant un quatrième aspect, la présente invention propose un programme d'ordinateur destiné à une station de radiocommunication, adaptée pour constituer un nœud d'un réseau ad hoc de radiocommunication, ledit programme comprenant des instructions pour mettre en œuvre les étapes d'un procédé selon le troisième aspect de l'invention lors d'une exécution du programme par des moyens de traitement de ladite station.

Suivant un cinquième aspect, la présente invention propose une station de radiocommunication constituant un nœud d'un réseau ad hoc de radiocommunication, comprenant un bloc de création de groupes de stations, adapté pour recevoir un message indiquant l'adresse réseau d'un groupe de stations et les adresses réseau des stations du groupe, pour enregistrer dans une table de correspondance, l'adresse réseau du groupe indiquée dans le message reçu et une mise en correspondance de l'adresse réseau du groupe avec les adresses réseau des stations du groupe indiquées dans le message reçu ;
ledit bloc de création de groupe étant en outre adapté pour déterminer si l'adresse réseau de ladite station comportant le bloc de création de groupe est présente dans le message reçu, et si l'adresse réseau de ladite station est bien déterminée présente, pour, enregistrer l'adresse réseau du groupe indiqué dans le message en tant qu'adresse de groupe de ladite station comportant le bloc de création de groupe.

Ces caractéristiques et avantages de l'invention apparaîtront à la lecture de la description qui va suivre, donnée uniquement à titre d'exemple, et faite en référence aux dessins annexés, sur lesquels :
- la figure 1 représente un chronogramme d'échanges mis en œuvre pour la création d'un groupe avec l'approche de type multicast par affiliation IGMP ;
- la figure 2 représente un réseau ad hoc dans un mode de mise en œuvre de l'invention ;
- la figure 3 représente des étapes d'un procédé dans un mode de mise en œuvre de l'invention ;
- la figure 4 représente des étapes d'un procédé dans un mode de mise en œuvre de l'invention ;
- la figure 5 représente un chronogramme des échanges dans un mode de réalisation de l'invention.

Un réseau de radiocommunication ad hoc 10 est représenté sur la figure 1. Le réseau ad hoc 10 comporte une pluralité de stations de radiocommunication parmi lesquelles les stations Si, i = 1 à 6 ; sont représentées.

Dans un mode de réalisation, certaines au moins des stations sont mobiles, ce qui occasionne des évolutions fréquentes de la topologie du réseau 10, et des tables de routage des stations.

Chaque station de radiocommunication Si comporte un bloc d'émission/réception radiofréquence Ni relié à une antenne et adapté pour constituer un nœud du réseau ad hoc 10.

Chaque nœud comprend par exemple une architecture en couches matérielles 1 à 3 dans le modèle OSI (en anglais Open Systems Interconnection).

Pour rappel, les adresses réseau, par exemple de type IP, sont les adresses utilisées par les nœuds du réseau pour les opérations de routage de données vers cette adresse. Ci-dessous, l'adresse réseau de la station Si, appelée aussi ci-après adresse réseau du nœud Ni, est référencée @Ni, i = 1 à 6.

Certaines des stations de radiocommunication comportent en outre un bloc applicatif comprenant par exemple une interface homme/machine adaptée pour permettre des interactions entre la station et un utilisateur. Par exemple, on considère ici qu'au moins les stations respectivement S1, S2, S3 comportent chacune un bloc applicatif respectivement A1, A2, A3. Dans un mode de réalisation, l'architecture du bloc applicatif Ai, i = 1 à 3, comprend des couches parmi les couches hautes 4 à 7 dans le modèle OSI.

Dans le mode de réalisation considéré, les blocs applicatifs A1, A2 et A3 comprennent en outre un module de traitement d'images comprenant un écran d'affichage et une caméra.

Dans un mode de réalisation, les stations comprennent une mémoire et un microprogrammateur. Certains au moins des traitements réalisés dans une station par le bloc applicatif et/ou par le nœud, et plus généralement par la station, notamment ceux décrits ci-dessous, sont mis en œuvre suite à l'exécution, sur le microprogrammateur, d'instructions logicielles correspondantes stockées dans la mémoire.

Une table de routage, nommé T_{R}, est notamment stockée dans la mémoire de chaque station, comprenant des éléments de routage élaborés en fonction de l'état courant de la topologie du réseau et de règles de routage.

Dans le mode de réalisation de l'invention ici considéré, une table de définition des groupes du réseau, nommée T_{GPnet}, est en outre stockée dans la mémoire de chaque station, pour y mémoriser les associations entre les adresses réseau de groupe et les adresses de leurs membres comme indiqué ci-après.

Et la mémoire de chaque station comprend en outre une table de définition des groupes d'appartenance de la station, nommée T_{GPloc}, pour y stocker chaque adresse réseau de groupe auquel la station appartient, associée dans un mode de réalisation à l'identifiant du groupe défini au niveau applicatif comme indiqué ci-après.

Chaque nœud 2 est adapté pour recevoir, via l'antenne, et traiter, des signaux radio fréquence en provenance d'un nœud voisin, et permettre l'émission de signaux radio fréquence, par l'intermédiaire d'au moins un canal radio partagé. Ces signaux radio véhiculent des données, par exemple des informations de signalisation, des données destinées aux blocs applicatifs des stations ou encore des données relatives au contrôle (routage etc.) du réseau 10.

Dans un mode de réalisation, un nœud Ni est adapté pour scruter le canal radio partagé afin de détecter et recevoir un signal radio qui serait émis sur le canal radio partagé, puis pour extraire la ou les adresses réseau indiquées dans le champ de destination des données véhiculées par le signal radio reçu.

Lorsque l'adresse réseau du nœud Ni, ou une adresse réseau de groupe d'un groupe auquel appartient la station Si et présente dans la table T_{GPloc} du nœud Ni, figure dans ce champ de destination, le nœud Ni traite ces données.

Pour chaque autre adresse réseau de nœud qui figure dans ce champ de destination, le nœud Ni détermine en fonction de ce qui est indiqué pour cette autre adresse réseau dans sa table de routage T_{R} si le nœud Ni se trouve sur le « chemin optimal » entre l'émetteur du message tel qu'identifié par son adresse réseau dans un champ d'émetteur des données et cette autre adresse réseau de destination. Dans le cas positif, il relaye les données reçues vers le nœud dans son voisinage radio désigné dans sa table de routage T_{R} comme le prochain nœud sur le chemin optimal vers l'adresse réseau de destination. Dans le cas négatif, le nœud Ni ne relaye pas les données à destination de cette autre adresse réseau de noeud.

Pour chaque autre adresse réseau de groupe qui figure dans ce champ de destination, le nœud Ni détermine quelles sont, dans sa table T_{GPloc}, les adresses réseau de nœud(s) qui sont associées à cette autre adresse réseau de groupe. Puis le nœud Ni détermine, en fonction de ce qui est indiqué dans sa table de routage T_{R} pour ces adresses réseau de nœud associées dans la table T_{GPloc} à cette autre adresse réseau de groupe, s'il est sur le « chemin optimal » entre l'émetteur du message et une ou plusieurs des adresses réseau de nœud associées dans la table T_{GPloc} à cette autre adresse réseau. Dans le cas positif, il relaye les données reçues vers le(s) nœud(s) dans son voisinage radio désigné(s) dans sa table de routage T_{R} comme nœud(s) suivant immédiatement le nœud Ni sur le chemin optimal vers celle(s) des adresses réseau de nœud associées dans la table T_{GPloc} à cette autre adresse réseau de groupe. Dans le cas négatif, il ne relaye pas les données à destination de cette autre adresse réseau de groupe.

La notion de « chemin optimal » n'est pas forcément celle correspondant au plus petit nombre de bonds radio. La détermination du chemin optimal pour aller d'un nœud à un autre peut prendre en compte un ou plusieurs critères à optimiser, en supplément ou à la place du nombre de bonds radio, par exemple des critères de charge des bonds réseau et/ou de capacités des bonds (par exemple des liens permettant ou non la transmission de certains services, type phonie, vidéo etc.).

Dans un mode de réalisation, les signaux radiofréquence échangés sont conformes au protocole IEEE 802.11 ou à des protocoles non standardisés en vigueur dans le domaine des radiocommunications militaires, et comportent par exemple des données de communications vocales, vidéo, des messages de type SMS, MMS ou de messagerie instantanée.

A l'instant considéré en référence à la figure 2, les nœuds reliés entre eux par une même courbe Cj, j= 1 à 3, sont à portée radio les uns des autres. Ainsi N1, N6 et N4 sont à portée radio les uns des autres, comme N2, N3, N4 et N5 ou encore N5 et N6.

Selon la topologie du réseau ad hoc 10 à l'instant considéré, on considère que la station S4, comprenant le nœud radiofréquence N4, relaye les données entre la station S1 et la station S2 d'une part, et que cette station S4 relaye en outre les données entre la station S1 et la station S3.

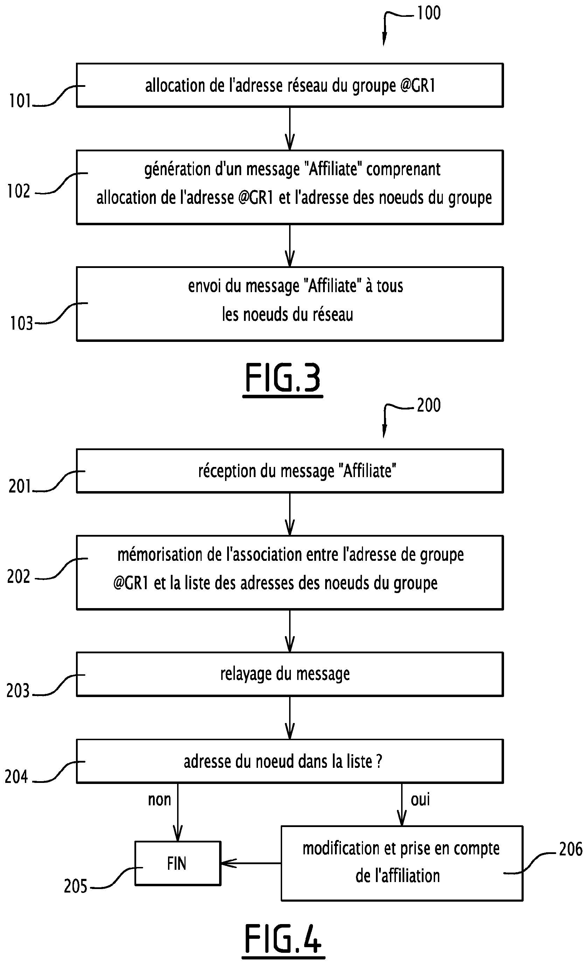

Des étapes d'un procédé 100 relatif à la création d'un groupe, dans un mode de réalisation de l'invention, sont décrites ci-dessous en référence à la figure 3.

Un utilisateur de la station S1 commande la création d'un groupe de stations, constitué par un sous-ensemble des stations du réseau, dans le cas considéré par la station S1, la station S2 et la station S3, via l'interface homme/machine du bloc applicatif A1, par exemple via un menu proposant une telle création et permettant à l'utilisateur de définir le nom, ici Grld1, qui identifie le groupe au niveau applicatif et d'indiquer les identifiants applicatifs, référencés @A2 ; @A3 ci-après, des membres S2, S3 du groupe.

Dans une étape 101, suite à cette commande de l'utilisateur depuis la station S1, une adresse réseau @GR1 est allouée par la station S1 pour ce groupe Grld1. Cette étape est par exemple mise en œuvre par la fourniture du bloc applicatif A1 au nœud N1 d'une commande de type JoinGroup(Gpld1 ; @A2 ; @A3).

Suite à la réception de cette commande, le nœud N1 crée une adresse IP pour ce groupe, par exemple par la mise en œuvre d'une fonction Mcast_alloc : @GR1 = Mcast_alloc(Grld1). Puis il détermine les adresses réseaux correspondant aux identifiants applicatifs @A2, @A3, par exemple par l'intermédiaire d'une fonction Add permettant des retrouver ces adresses dans une table mémorisant les correspondances entre les niveaux applicatifs et réseau : @N2 = Add(@A2) et @N3 = Add(@A3.

Puis, dans une étape 102, un message de déclaration du groupe est généré par la station S1. Ce message comprend, dans le mode de réalisation considéré :
- un nom de type de message, ici « Affiliate », indiquant au réseau qu'il s'agit d'un message de création de groupe,
- un champ de déclaration de l'adresse réseau allouée pour le nouveau groupe créé, indiquant ici l'adresse @GR1,
- un champ de déclaration des membres du groupe comprenant la liste des adresses réseau des membres du groupe, ici @N1, @N2, @N3, et
- un champ de déclaration du nom du groupe choisi, ici Grld1.

Par ailleurs, ce message est précédé d'un en-tête comprenant le champ de destination du message Affiliate. Le champ de destination indique l'adresse d'inondation du réseau, @bcast assurant ainsi la diffusion du message à tous les nœuds du réseau 10.

Le message prend ainsi la forme suivante : @bcast Affiliate [@GR1 ; (@N1 ; @N2 ; @N3) ; Grld1].

Dans une étape 103, le message @bcast Affiliate [@GR1 ; (@N1 ; @N2 ; @N3) ; Grld1] est transmis par la station S1 sur le canal radio partagé à destination de toutes les stations du réseau 10.

Conformément au mécanisme d'inondation, le nœud qui initie l'inondation envoie le paquet à tous ses voisins directs : de même si un nœud quelconque de réseau reçoit le paquet pour la première fois, il le rediffuse à tous les voisins. Ainsi de proche en proche le paquet inonde le réseau.

Un procédé 200 mis en œuvre par chaque station du réseau Si, i = 1 à 6, lorsqu'elle reçoit le message Affiliate transmis par la station S1 est maintenant décrit en référence à la figure 4.

Ainsi dans une étape 201, la station Si reçoit le message Affiliate et détermine qu'il lui est bien adressé puisque l'adresse de destination est l'adresse d'inondation du réseau et le traite comme indiqué ci-après.

Dans une étape 202, la station Si mémorise dans sa table T_{GPnet} l'association entre l'adresse réseau de groupe @GR1 déclarée dans le message Affiliate reçu et chacune des adresses réseau des membres du groupe telles que déclarées dans le message Affiliate. Ainsi dans le cas présent, elle mémorise dans sa table T_{GPnet} l'association entre @GR1 d'une part et @N1, @N2 et @N3 respectivement.

Dans un mode de réalisation, cette association est effectuée suite à l'exécution d'une commande link(@GR1, @N1, @N2, @N3) par la station Si.

Le contenu de cette table T_{GPnet} tel que mis à jour sera ensuite exploité par la station Si lorsque des données ultérieurement reçues seront à router à destination de l'adresse réseau de groupe GR1 indiquée dans le champ de destination des données, comme décrit plus bas.

Dans une étape 203, la station Si relaye à son tour le message Affiliate qu'elle a reçu vers les stations du réseau à proximité radio, conformément au mécanisme d'inondation.

Dans une étape 204, la station Si détermine si l'adresse réseau @Ni de la station Si est présente dans la liste des adresses des membres du groupe indiquées dans le message Affiliate reçu.

Dans le cas négatif, i.e. dans le cas présent, pour tout i = 4 à 6, le processus local à la station de création du groupe d'adresse réseau @GR1 est achevé (étape 205).

Dans le cas positif, dans une étape 206, des opérations d'affiliation au nouveau groupe d'adresse @GR1 sont mises en œuvre localement à la station Si. Tout d'abord, la station Si ajoute dans sa table T_{GPloc} l'adresse réseau @GR1 du nouveau groupe à laquelle appartient la station Si, en y associant l'identifiant applicatif Grld1 du groupe tel qu'indiqué dans le message Affiliate.

Dans un mode de réalisation, un message est fourni par le nœud Ni au bloc applicatif Ai, indiquant l'affiliation de la station Si à un nouveau groupe et indiquant en outre l'identifiant applicatif, ici Grld1, du groupe. Ce premier message est par exemple du type JoinGroup(Grld1). Suite à la réception de ce message par le bloc applicatif Ai, ce dernier provoque par exemple la fourniture à l'utilisateur de la station Si, via l'interface homme-machine, de l'information selon laquelle la station Si vient d'être affiliée au groupe d'identifiant Grld1.

Puis à l'issue de l'étape 206, le processus est stoppé (étape 205).

L'utilisation par la station Si de la table T_{Gploc} est la suivante : lors de la réception de données par la station Si, l'adresse indiquée dans le champ de destination des données est alors comparée par la station Si avec le contenu des adresses de la table T_{GPloc} et si cette adresse indiquée est bien égale à une adresse de la liste L_{GRloc}, la station Si détermine ainsi que les données reçues lui sont bien destinées et traite le message en conséquence.

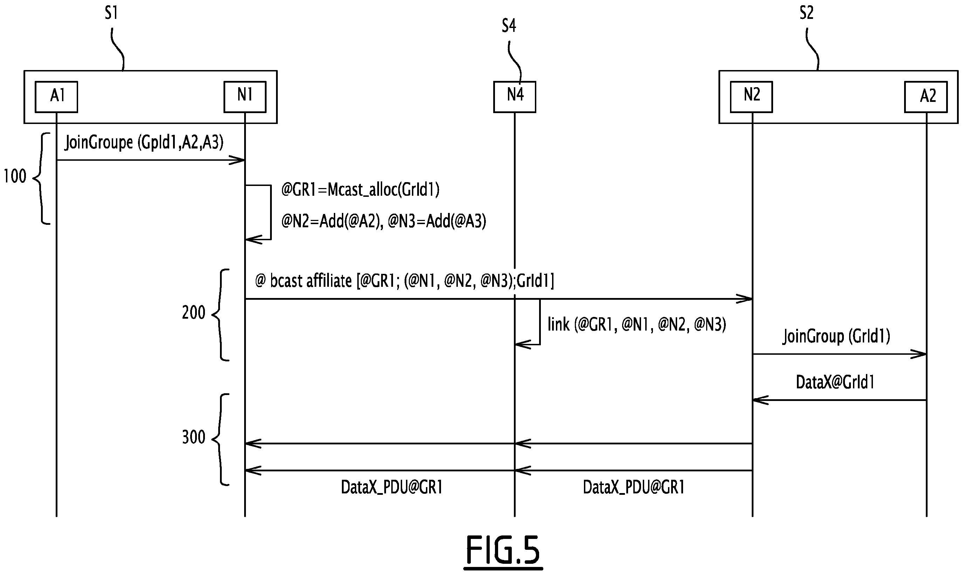

Les principaux échanges mis en œuvre dans les procédés ci-dessus sont représentés dans le chronogramme de la figure 5 relativement à l'affiliation au groupe Grld1 de la station S2 via la station S4 et depuis la station S1.

Ainsi l'envoi d'un seul message Affiliate à un membre du groupe permet d'une part de prévenir ce membre de son affiliation à un groupe, et d'autre part permet de construire les éléments nécessaires au routage par les nœuds intermédiaires, des futures données qui seront échangées dans le groupe.

Pour illustration, dans un mode de réalisation, il est ensuite considéré que l'utilisateur de la station S2 commande la transmission de données au groupe Grld1 (procédé 300).

Ces données sont par exemple un fichier de données vidéo DataX capturé à l'aide de la caméra du bloc applicatif A2. Pour ce faire, l'utilisateur de la station S2, via l'interface homme-machine, sélectionne le fichier de données DataX et indique en outre l'identifiant Grld1, par exemple par sélection dans les identifiants applicatifs de la table T_{GPloc}.

Suite à cette commande de l'utilisateur, le bloc applicatif A2 transmet au nœud N2 dans une étape 301, une commande correspondante de transmission des données DataX au groupe Grld1, par exemple sous la forme de la commande DataX@Grld1.

Le nœud N2 à réception de cette commande, segmente le fichier de données DataX en de multiples paquets DataX_PDU, extrait de la table T_{GPloc} de la station S2 l'adresse réseau @GR1 du groupe associée à l'identifiant Grld1, et indique dans le champ de destination des paquets cette adresse réseau @GR1.

Les paquets ainsi renseignées DataX_PDU@GR1 sont alors émis sur le réseau 10 dans une étape 302.

Chaque paquet DataX_PDU@GR1 est reçu par les nœuds N3, N4 et N5.

Chacun de ces nœuds Ni, i = 3, 4 ou 5 met en œuvre les étapes suivantes.

Dans une étape 303, l'adresse réseau de destination @GR1 est tout d'abord comparée à l'adresse réseau @Ni du nœud Ni, puis aux adresses réseau de groupe de la table T_{GPloc} de la station Si.

Si @GR1 est déterminée présente dans la table T_{GPloc} (ce qui est le cas pour i = 3), le nœud Ni en déduit que la station Si est bien destinataire du paquet reçu DataX_PDU et le fournit au bloc applicatif Ai pour traitement (dans le cas présent par exemple, pour proposer à l'utilisateur l'affichage sur l'écran du fichier vidéo une fois l'ensemble des paquets correspondants reçus).

Dans une étape 304, que le nœud Ni ait été déterminé destinataire ou non dans l'étape 303, le nœud Ni détermine s'il est un nœud relais pour la transmission de données vers l'adresse réseau @GR1 et depuis l'émetteur S2. A cette fin, il détermine si l'adresse @GR1 est une adresse de groupe mémorisée dans sa table T_{GPnet}, et dans le cas positif, il extrait les adresses réseau des membres associés à @GR1 dans T_{GPnet} et détermine, en fonction des éléments de sa table de routage L_{R}, celle(s), de ces adresses réseau associées à @GR1, pour laquelle ou lesquelles il est sur le chemin optimal. Si il y en a aucune, le nœud Ni ne relaie pas le paquet de données DataX_PDU@GR1 (c'est le cas pour N = 5). Sinon, le nœud relaie le paquet de données (c'est le cas pour i = 4).

Suite au relayage ainsi effectué par le nœud N4, le paquet DataX_PDU@GR1 est alors reçu par le nœud N1, qui met en œuvre à son tour les étapes du procédé 300, donnant lieu à la fourniture au bloc applicatif A1 des données DataX du fichier vidéo au fur et à mesure de la réception des différents paquets DataX_PDU@GR1.

La présente invention permet ainsi d'établir un groupe avec une adresse de type multicast dans un temps indépendant, ou peu dépendant, du nombre de membres du groupe d'une part.

D'autre part, les messages échangés dans le groupe ont une taille d'en-tête (comprenant le champ des destinataires) qui est indépendante du nombre de membres également.

Les étapes des procédés selon l'invention ont été décrites ci-dessus en référence à la création de groupe. Néanmoins, ces étapes sont mises en œuvre de manière similaire pour des opérations de suppression d'un groupe créé, ou encore de modification d'un groupe créé, comprenant par exemple la suppression ou l'ajout d'un membre, comprenant la constitution d'un groupe à partir de deux autres groupes, par addition ou exclusion etc.

Dans le mode de réalisation considéré, l'ensemble des messages JoinGroup et Affiliate donne lieu à la création d'un groupe comprenant la station S1 dont émane la commande Affiliate. Un autre ensemble de messages peut en outre être prise en compte selon l'invention, selon laquelle la station S1 n'est pas membre du groupe si la station S1 n'est pas explicitement désignée dans le champ des messages indiquant les membres du groupe.

## Revendications

1. Procédé de traitement, dans un réseau ad hoc (10) de radiocommunications comprenant un ensemble de stations de radiocommunication (Si, i=1 à 6) constituant chacune un nœud (Ni, i=1 à 6) du réseau ad hoc, ledit procédé comprenant les étapes suivantes pour créer un groupe comprenant un sous-ensemble desdites stations :
i/ créer par une première station (S1) un premier message indiquant l'adresse réseau du groupe et les adresses réseau des stations du groupe ;
ii/ transmettre depuis ladite première station et à destination de l'ensemble des stations du réseau ad hoc, ledit premier message ;
iii/ chaque station de l'ensemble des stations du réseau ad hoc mettant en œuvre les étapes suivantes, suite à la réception dudit premier message par ladite station :
- enregistrer par ladite station, dans une table de correspondance, l'adresse réseau du groupe et une mise en correspondance entre ladite adresse réseau du groupe indiquée dans le premier message et les adresses réseau des stations du groupe indiquées dans le premier message ;
- déterminer si l'adresse réseau de ladite station est présente dans les adresses réseau des stations du groupe indiquées par le premier message ; et
- si l'adresse réseau de ladite station est déterminée présente, enregistrer, par ladite station, l'adresse réseau du groupe indiqué dans le premier message en tant qu'adresse de groupe de ladite station.

2. Procédé selon la revendication 1, comprenant les étapes suivantes suite à la transmission sur le réseau d'un deuxième message indiquant ladite adresse réseau de groupe en tant qu'adresse de destination dudit deuxième message :
- recevoir, par une station (S4), ledit deuxième message transmis ;
- identifier, par ladite station, depuis la table de correspondante de ladite station, la liste des adresses réseau des stations du groupe correspondant dans ladite table à l'adresse réseau de groupe indiquée en tant qu'adresse de destination du message ; et
- déterminer la nécessité ou non de transmettre ledit deuxième message par ladite station, en fonction de la liste identifiée ;
- s'il a été déterminé nécessaire de transmettre ledit deuxième message par ladite station, transmettre, par ladite station et avec ladite adresse réseau de groupe en tant qu'adresse de destination du deuxième message, ledit deuxième message.

3. Procédé selon la revendication 2, comprenant en outre les étapes suivantes suite à la réception par ladite station dudit deuxième message :
- déterminer, par ladite station (S4), si ladite adresse réseau de groupe indiquée en tant qu'adresse de destination du deuxième message est une adresse de groupe de ladite station ; et
- si ladite adresse réseau de groupe indiquée est déterminée comme adresse de groupe de ladite station, identifier un module applicatif de ladite station destiné à traiter le deuxième message, en fonction dudit deuxième message ; et fourniture du contenu dudit deuxième message au module applicatif identifié.

4. Procédé selon l'une quelconque des revendications précédentes, comprenant en outre une étape préalable de création de l'adresse réseau du groupe par la première station (S1).

5. Réseau ad hoc (10) de radiocommunications comprenant un ensemble de stations de radiocommunication (Si, i=1 à 6) constituant chacune un nœud (Ni, i=1 à 6) du réseau ad hoc, le réseau ad hoc (10) étant configuré pour mettre en œuvre le procédé de traitement selon l'une quelconque des revendications précédentes.

6. Procédé de communication mis en œuvre dans une première station de radiocommunication (S4) constituant un nœud d'un réseau ad hoc (10) de radiocommunication, comprenant les étapes suivantes pour créer un groupe comprenant un sous-ensemble des stations de radiocommunication du réseau ad hoc :
- recevoir, par la première station, un message indiquant l'adresse réseau d'un groupe de stations et les adresses réseau des stations du groupe ;
- enregistrer, par la première station, dans une table de correspondance, l'adresse réseau du groupe indiquée dans le message reçu et une mise en correspondance de l'adresse réseau du groupe et des adresses réseau des stations du groupe indiquées dans le message reçu ;
- déterminer, par la première station, si l'adresse réseau de ladite première station est présente dans le message reçu ; et
- si l'adresse réseau de ladite première station est déterminée présente, enregistrer, par la première station, l'adresse réseau du groupe indiqué dans le message en tant qu'adresse de groupe de ladite première station.

7. Programme d'ordinateur destiné à une station de radiocommunication (S4), adaptée pour constituer un nœud (N4) d'un réseau ad hoc (10) de radiocommunication, ledit programme comprenant des instructions pour mettre en œuvre les étapes d'un procédé selon la revendication 6 lors d'une exécution du programme par des moyens de traitement de ladite station.

8. Station de radiocommunication (S4) constituant un nœud (N4) d'un réseau ad hoc (10) de radiocommunication, comprenant un bloc de création de groupes de stations, adapté pour recevoir un message indiquant l'adresse réseau d'un groupe de stations et les adresses réseau des stations du groupe, pour enregistrer dans une table de correspondance, l'adresse réseau du groupe indiquée dans le message reçu et une mise en correspondance de l'adresse réseau du groupe avec les adresses réseau des stations du groupe indiquées dans le message reçu ;
ledit bloc de création de groupe étant en outre adapté pour déterminer si l'adresse réseau de ladite station comportant le bloc de création de groupe est présente dans le message reçu, et si l'adresse réseau de ladite station est bien déterminée présente, pour, enregistrer l'adresse réseau du groupe indiqué dans le message en tant qu'adresse de groupe de ladite station comportant le bloc de création de groupe.

## Patentansprüche

1. Verarbeitungsverfahren in einem Funkkommunikation-Ad-Hoc-Netz (10), welches eine Menge von Funkkommunikationsstationen (Si, i = 1 bis 6), welche jeweils einen Knoten (Ni, i = 1 bis 6) des Ad-Hoc-Netzes bilden, aufweist, wobei das Verfahren die folgenden Schritte zum Erzeugen einer Gruppe, die eine Untermenge dieser Stationen umfasst, aufweist:
i/ Erzeugen, durch eine erste Station (S1), einer ersten Nachricht, welche die Gruppennetzadresse und die Netzadressen der Stationen der Gruppe angibt,
ii/ Senden, von der ersten Station aus und zur Menge an Stationen des Ad-Hoc-Netzes, der ersten Nachricht,
iii/ wobei jede Station der Menge an Stationen des Ad-Hoc-Netzes die folgenden Schritte im Anschluss an den Empfang der ersten Nachricht durch die Station durchführt:
- Registrieren, durch die Station in einer Korrespondenztabelle, der Gruppennetzadresse und einer Zuordnung zwischen der Gruppennetzadresse, welche in der ersten Nachricht angegeben ist, und den Netzadressen der Stationen der Gruppe, welche in der ersten Nachricht angegeben sind,
- Ermitteln, ob die Netzadresse der Station in den Netzadressen der Stationen der Gruppe, welche in der ersten Nachricht angegeben sind, vorhanden ist, und
- falls die Netzadresse der Station als vorhanden ermittelt wird, Registrieren, durch die Station, der Gruppennetzadresse, welche in der ersten Nachricht angegeben ist, als die Gruppenadresse der Station.

2. Verfahren gemäß dem Anspruch 1, aufweisend die folgenden Schritte im Anschluss an das Senden, über das Netz, einer zweiten Nachricht, welche die Gruppennetzadresse als Zieladresse der zweiten Nachricht angibt:
- Empfangen, durch eine Station (S4), der übertragenen zweiten Nachricht,
- Identifizieren, aus der Korrespondenztabelle der Station durch die Station, die Liste der Netzadressen der Stationen der Gruppe, welche in der Tabelle mit der Gruppennetzadresse, welche als die Zieladresse der Nachricht angegeben ist, korrespondiert,
- Ermitteln anhand der identifizierten Liste, ob es erforderlich ist, die zweite Nachricht durch die Station zu übertragen, oder ob nicht,
- falls ermittelt wird, dass es erforderlich ist, die zweite Nachricht durch die Station zu übertragen, Übertragen der zweiten Nachricht durch die Station und mit der Gruppennetzadresse als Zieladresse der zweiten Nachricht.

3. Verfahren gemäß dem Anspruch 2, ferner aufweisend die folgenden Schritte im Anschluss an den Empfang der zweiten Nachricht durch die Station:
- Ermitteln durch die Station (S4), ob die Gruppennetzadresse, welche als die Zieladresse der zweiten Nachricht angegeben ist, eine Gruppenadresse der Station ist; und
- falls die angegebene Gruppennetzadresse als die Gruppenadresse der Station ermittelt wird, Identifizieren eines Anwendungsmoduls der Station, welches dazu bestimmt ist, die zweite Nachricht zu verarbeiten, in Abhängigkeit von der zweiten Nachricht; und Bereitstellen des Inhalts der zweiten Nachricht an das identifizierte Anwendungsmodul.

4. Verfahren gemäß irgendeinem der vorhergehenden Ansprüche, ferner aufweisend einen vorausgehenden Schritt der Erzeugung der Gruppennetzadresse durch die erste Station (S1).

5. Funkkommunikation-Ad-Hoc-Netz (10), welches eine Menge von Funkkommunikationsstationen (Si, i = 1 bis 6), welche jeweils einen Knoten (Ni, i = 1 bis 6) des Ad-Hoc-Netzes bilden, aufweist, wobei das Ad-Hoc-Netz (10) dazu eingerichtet ist, ein Verarbeitungsverfahren gemäß irgendeinem der vorhergehenden Ansprüche durchzuführen.

6. Kommunikationsverfahren, das in einer ersten Funkkommunikationsstation (S4), die einen Knoten eines Funkkommunikation-Ad-Hoc-Netz (10) bildet, durchgeführt wird, aufweisend die folgenden Schritte zum Erzeugen einer Gruppe, die eine Untermenge von Funkkommunikationsstationen des Ad-Hoc-Netzes aufweist:
- Empfangen, durch die erste Station, einer Nachricht, welche die Netzadresse einer Gruppe von Stationen und die Netzadressen der Stationen der Gruppe angibt,
- Registrieren, durch die erste Station in einer Korrespondenztabelle, der Gruppennetzadresse, welche in der empfangenen Nachricht angegeben ist, und einer Zuordnung der Gruppennetzadresse und der Netzadressen der Stationen der Gruppe, welche in der empfangenen Nachricht angegeben sind,
- Ermitteln durch die erste Station, ob die Netzadresse der ersten Station in der empfangenen Nachricht vorhanden ist, und
- falls die Netzadresse der ersten Station als vorhanden ermittelt wird, Registrieren, durch die erste Station, der Gruppennetzadresse, welche in der Nachricht angegeben ist, als die Gruppenadresse der ersten Station.

7. Computerprogramm, welches für eine Funkkommunikationsstation (S4) bestimmt ist, die dazu eingerichtet, ist einen Knoten (N4) eines Funkkommunikation-Ad-Hoc-Netzes (10) zu bilden, wobei das Programme Befehle zum Durchführen der Schritte eines Verfahrens gemäß dem Anspruch 6 bei Ausführung des Programms durch Verarbeitungsmittel der Station aufweist.

8. Funkkommunikationsstation (S4), die einen Knoten (N4) eines Funkkommunikation-Ad-Hoc-Netzes (10) bildet, aufweisend einen Block zur Erzeugung von Gruppen von Stationen, welcher dazu eingerichtet ist, eine Nachricht, welche die Netzadresse einer Gruppe von Stationen und die Netzadressen der Stationen der Gruppe angibt, zu empfangen, die Gruppennetzadresse, welche in der empfangenen Nachricht angegeben ist, und eine Zuordnung der Gruppennetzadresse mit den Netzadressen der Stationen der Gruppe, welche in der empfangenen Nachricht angegeben werden, in einer Korrespondenztabelle zu registrieren,
wobei der Block zur Erzeugung der Gruppe ferner dazu eingerichtet ist, zu ermitteln, ob die Netzadresse der Station, welche den Block zur Erzeugung der Gruppe aufweist, in der empfangenen Nachricht vorhanden ist, und, falls die Netzadresse der Station tatsächlich als vorhanden ermittelt wird, die Gruppennetzadresse, welche in der Nachricht angegeben ist, als die Gruppenadresse der Station, welche den Block zur Erzeugung der Gruppe aufweist, zu registrieren.

## Claims

1. A method for data processing, in an ad hoc radio communication network (10) including a set of radio communication stations (Si, i = 1 to 6) each forming a node (Ni, i = 1 to 6) of the ad hoc network, the said method including the following steps in order to create a group comprising of a subset of the said stations:
i/ creating by a first station (S1) of a first message indicating the network address of the group and the network addresses of the stations in the group ;
ii/ transmitting from the said first station and to all of the stations in the ad hoc network, the said first message ;
iii/ implementing, by each station of all stations in the ad hoc network, the following steps upon receipt of the said first message by the said station :
- recording by the said station, in a lookup correlation - mapping table, of the network address of the group and performing a mapping between the said network address of the group indicated in the first message and the network addresses of the stations in the group indicated in the first message ;
- determining whether the network address of the said station is present among the network addresses of the stations in the group indicated by the first message ; and
- if the network address of the said station is determined to be present, recording, by the said station, of the network address of the group indicated in the first message as the group address of the said station.

2. A method according to claim 1, including the following steps following the transmission over the network of a second message indicating the said group network address as the destination address of the said second message :
- receiving by a station (S4), of the said second message transmitted ;
- identification, by the said station, from the lookup correlation - mapping table of the said station, of the list of network addresses of stations in the group corresponding in the said table to the group network address indicated as the destination address of the message ; and
- determining whether or not it is necessary to transmit the said second message by the said station, based on the identified list;
- if it is determined to be necessary for the said station to transmit the said second message, transmission, by the said station and with the said group network address as the destination address of the second message, of the said second message.

3. A method according to claim 2, further including the following steps following the receipt by the said second station of the said message :
- determining, by the said station (S4), whether the said group network address indicated as the destination address of the second message is a group address of the said station ; and
- if the said group network address indicated is determined as being the group address of the said station, identifying an application module of the said station intended for processing the second message, depending upon the said second message ; and provision of the content of the said second message to the application module identified.

4. A method according to any one of the preceding claims, further including a prior step of creation of the group of network address by the first station (S1).

5. An ad hoc radio communication network (10) comprising a plurality of radio communication stations (Si, i=1 to 6) each constituting a node (Ni, i=1 to 6) of the ad hoc network, the ad hoc network (10) being configured to implement the method for data processing according to any one of the preceding claims.

6. A communication method implemented in a first radio communication station (S4) constituting a node of an ad hoc radio communication network (10), including the following steps in order to create a group comprising a subset of the radio communication stations of the ad hoc network:
- receiving, by the first station, of a message indicating the network address of a group of stations and the network addresses of the stations in the group ;
- recording, by the first station, in a lookup correlation - mapping table, of the network address of the group indicated in the message received and performing a mapping between the network address of the group and the network addresses of the stations in the group indicated in the received message ;
- determining, for the first station, if the network address of the said first station is present in the received message ; and
- if the network address of the said first station is determined to be present, recording, by the said first station, of the network address of the group indicated in the message as the group address of the said first station.

7. A computer software programme designed for a radio communication station (S4), capable of forming a node (N4) of an ad hoc radio communication network (10), the said programme comprising of instructions for implementing the steps of a method according to claim 6 during the execution of the programme by the data processing means of the said station.

8. A radio communication station (S4) constituting a node (N4) of an ad hoc radio communication network (10), including a block for creating groups of stations, adapted for receiving a message indicating the network address of a group of stations and the network addresses of the stations in the group, for recording in a mapping table, the network address of the group indicated in the message received and performing a mapping between the network address of the group and the network addresses of the stations in the group indicated in the received message,
the said group creation block being further capable of determining whether the network address of the said station including the group creation block is present in the received message, and if the network address of the said station is indeed determined to be present, capable of recording the network address of the group indicated in the message as the group address of the said station including the group creation block.
